# FASCICULE DE BREVET EUROPEEN

(11) **EP 0 611 519 B1**
(45) Date de publication et mention de la délivrance du brevet: **16.09.1998**
(21) Numéro de dépôt: 94400352.4
(22) Date de dépôt: 17.02.1994
(51) Int. Cl.: A01C 11/02

(54) **Perfectionnement aux machines de plantation de mottes cubiques**
Pflanzmaschine für Erdballen-Setzlinge
Transplanter for seedling blocks

(30) Priorité: 19.02.1993 FR 9302177
(43) Date de publication de la demande: 24.08.1994
(73) Titulaire: REGERO, Société Anonyme, F-44084 Nantes Cedex 03 (FR)
(72) Inventeur: Pinson, Dominique, F-44000 Nantes (FR); Pogu, Christian, F-44120 Basse Goulaine (FR)
(74) Mandataire: Michelet, Alain

(56) Documents cités:
- EP-A- 0 475 839
- FR-A- 2 540 331
- GB-A- 2 114 413
- US-A- 4 289 080

## Description

La présente invention concerne un perfectionnement aux machines de plantation de plants cultivés dans des plaques de terreau qui sont ensuite découpées en lignes et en rangées pour former des petits cubes compacts appelés mottes cubiques ou simplement mottes.

Ces mottes cubiques sont relativement fragiles puisqu'il s'agit d'un simple bloc de terreau avec un plant bien développé dont le feuillage varie entre 5 et au moins 15 cm de hauteur.

Les machines de ce type sont bien connues mais elles sont souvent relativement complexes, surtout au niveau des mécanismes de distribution et de préhension des mottes pour leur mise en terre.

D'autres machines, comme celle décrite dans le document GB-A-2 114 413, ne peuvent pas planter des mottes autres que celles qui sont dénommées "paper pot". Il s'agit en effet de mottes emmaillottées dans du papier pour leur donner une certaine consistance et leur permettre de résister aux aggressions des différents mécanismes de la planteuse. De plus, les plants sont reliés les uns aux autres par une bande de papier qui permet de les faire progresser dans la machine.

La présente invention propose un perfectionnement aux machines décrites dans les documents FR-A-2 540 331, qui décrit le préambule de la revendication 1, et EP-A-475 839.

Pour améliorer les cadences de la machine décrite dans le document FR-A-2 540 331, dont le système de mise en terre est constitué d'une paire de pinces à mouvement alternatif, le document EP-A-475 839 propose un système de mise en terre par pinces du type à mouvement continu rotatif, c'est-à-dire un système qui s'apparente à celui qui est décrit dans le document GB-A-2 114 413.

La présente invention permet de conserver un niveau de cadence élevé, en diminuant les risques d'altération des plants, et en simplifiant à l'extrême le mécanisme de séparation des mottes.

Par ailleurs, les perfectionnements apportés aux mécanismes permettent de réduire de façon notable la quantité d'énergie nécessaire à leur entraînement.

De plus, le réglage de ces machines n'est pas toujours commode, surtout le réglage de la profondeur de plantation. La présente invention propose une machine qui remédie à tous ces inconvénients. Elle propose notamment une machine qui comporte des simplifications importantes de façon à offrir une fiabilité hors pair et à diminuer de façon conséquente leur prix de revient.

Pour améliorer la précision de la mise en terre et en particulier la profondeur de la plantation, l'invention propose une machine équipée de modules de plantation indépendants ; chaque module comportant ses propres moyens de réglage, facilement accessibles pour l'opérateur.

La machine selon l'invention comporte les caractéristiques de la revendication 1.

Selon une disposition préférentielle de l'invention, les moyens d'immobilisation sont manoeuvrés à partir d'une manivelle principale unique articulée à la partie inférieure arrière de la goulotte, autour d'un axe transversal horizontal, laquelle manivelle de commande est actionné-e par un système de cames qui est entraîné de façon synchronisée, par les moyens de préhension des mottes.

Toujours selon l'invention, et selon un premier mode de réalisation, la manivelle se prolonge, à sa partie inférieure, par la butée qui maintient la première motte à l'extrémité aval de la goulotte, et, au-dessus de son axe d'articulation, par un prolongement en forme de poussoir qui permet d'actionner l'organe presseur par l'intermédiaire d'un ressort et de le rappeler en position inactive.

Selon un autre mode de réalisation, l'axe de la manivelle principale de commande comporte d'une part, un prolongement à sa partie supérieure, en forme de poussoir pour actionner l'organe presseur par l'intermédiaire d'un ressort, comme précédemment et, d'autre part, à son extrémité opposée à celle de la manivelle, une came circulaire qui coopère avec un galet emprisonné dans le chemin de ladite came, lequel galet est chargé de manoeuvrer, au moyen d'un bras fixé en bout d'un axe secondaire situé derrière et parallèlement à l'axe principal, la butée solidaire dudit axe secondaire, servant à retenir la première motte en bas de la goulotte.

En fait, cette came supplémentaire permet de retarder l'escamotage de la butée de retenue de la première motte par rapport à la mise en place du poussoir chargé de retenir la pile de mottes à partir de la deuxième motte, et inversement. Cette particularité permet de remédier au problème d'éjection simultanée de deux mottes au lieu d'une. Ce problème étant principalement lié aux variations de dimensions des mottes.

Selon une autre disposition de l'invention, les pinces et le système de cames sont disposés sur un même axe de rotation et leur entrainement est assuré par une transmission commune à tous les modules de plantations, à partir du bâti de la machine.

Toujours selon l'invention, le système de cames est constitué d'un plateau central et d'une couronne concentrique et coplanaire définissant un chemin à profil de came qui coopère avec un galet suiveur à mouvement radial, monté sur un bras basculeur qui, par l'intermédiaire d'une bielle, manoeuvre la manivelle principale.

Toujours selon l'invention, la goulotte de distribution est positionnée verticalement sur un châssis qui comprend :
- une roue avant servant de référence sur le sol ;
- un soc situé sous la goulotte et sous les moyens de préhension qui sont en forme de pinces rayonnantes ;
- des roues plombeuses à l'arrière servant également à régler la profondeur de plantation ;
- éventuellement des rasettes situées entre le soc et les roues plombeuses ;
- des moyens de liaison avec le bâti principal de la machine.

Selon une autre disposition de l'invention, les moyens de liaison du châssis de plantation avec le bâti principal, sont constitués d'une flèche rigide articulée à chacune de ses extrémités selon un axe transversal horizontal.

Toujours selon l'invention, la machine comporte au moins un bras supplémentaire de relevage, parallèle à la flèche, interposé entre le bâti et le châssis de plantation, avec cependant un jeu suffisant pour laisser libre ledit châssis pendant sa phase active de plantation.

L'invention sera encore détaillée à l'aide de la description suivante et des dessins annexés, donnés à titre indicatif et dans lesquels :
- la figure 1 représente, de façon schématique, un module de plantation selon l'invention, en élévation ;
- la figure 2 représente une coupe horizontale de la goulotte selon A-A ;
- la figure 3 représente une coupe horizontale de la goulotte selon B-B ;
- la figure 4 représente, schématiquement, les moyens d'immobilisation des mottes tels que représentés figure 1, vus de côté ;
- la figure 5 représente une vue de dos de la figure 4;
- les figures 6 à 9 illustrent une variante des moyens d'immobilisation des mottes.

Tel que représenté sur la figure annexée, le module de plantation est constitué d'un châssis 1 formant une sorte de caisson ouvert à sa partie supérieure et inférieure. Ce châssis comporte, à l'avant, une roue 2 servant de roue de référence par rapport au sol. Sous le châssis, on trouve un soc 3 fixé par les boulons 4 sur les côtés inférieurs dudit châssis. A l'arrière du châssis, on trouve les roues plombeuses 5 chargées de refermer le sillon ouvert par le soc 3 et dans lequel sont déposées les mottes 6. On peut également prévoir, non représentées, des rasettes disposées entre le soc et chaque roue plombeuse.

Les mottes 6 sont déposées au sol, à intervalles réguliers, par des moyens de préhension en forme de pinces rayonnantes 7. Ces pinces, au nombre de huit sur la figure, sont constituées de paires de lames flexibles, en acier, articulées autour d'un axe 8 situé sensiblement au centre du châssis 1, dans sa partie supérieure. Les lames des pinces 7, coopèrent notamment avec des guides 9 en forme d'arcs de cercles, centrés autour de l'axe 8, et solidaires du châssis 1, pour réaliser le serrage des mottes et les relâcher au moment opportun, dans le sillon préparé par le soc 3.

Les mottes 6 sont prélevées une à une à l'extrémité inférieure d'une goulotte verticale 10 solidaire du châssis 1 à sa partie avant, légèrement en retrait de la pointe du soc 3. Cette goulotte de distribution de mottes, se présente sous la forme d'un couloir vertical où les mottes 6 progressent par simple gravité. Le remplissage de cette goulotte s'effectue par exemple manuellement à sa partie supérieure, par un opérateur posté sur la machine.

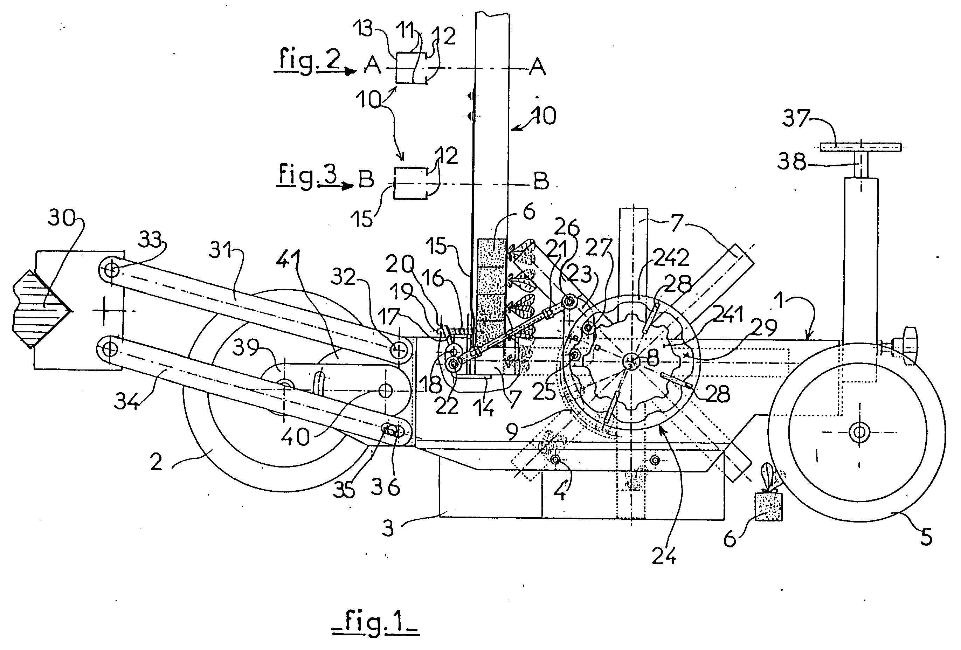

On a représenté, figure 2, une section selon AA de la goulotte. Cette goulotte 10 a une section en forme de U. Les branches latérales 11 de ce U comportent, à leurs extrémités, des replis 12 orientés vers l'intérieur. Ces replis 12 couvrent partiellement la face supérieure des mottes 6, de part et d'autre du plant qui est centré dans cette motte. La motte est canalisée par cette goulotte; sa surface supérieure glisse contre les replis 12 et ces replis ne risquent pas d'altérer le plant.

Le fond 13 de la goulotte est plan, et relie les deux côtés 11.

Les mottes 6 sont retenues dans la goulotte 10 au moyen d'une butée ou trappe 14, située à la partie inférieure aval, en contact avec la première motte située en bas de la colonne. Cette butée 14 s'escamote lorsqu'un jeu de pinces 7 prend en charge cette première motte pour la positionner dans le sillon ouvert par le soc 3.

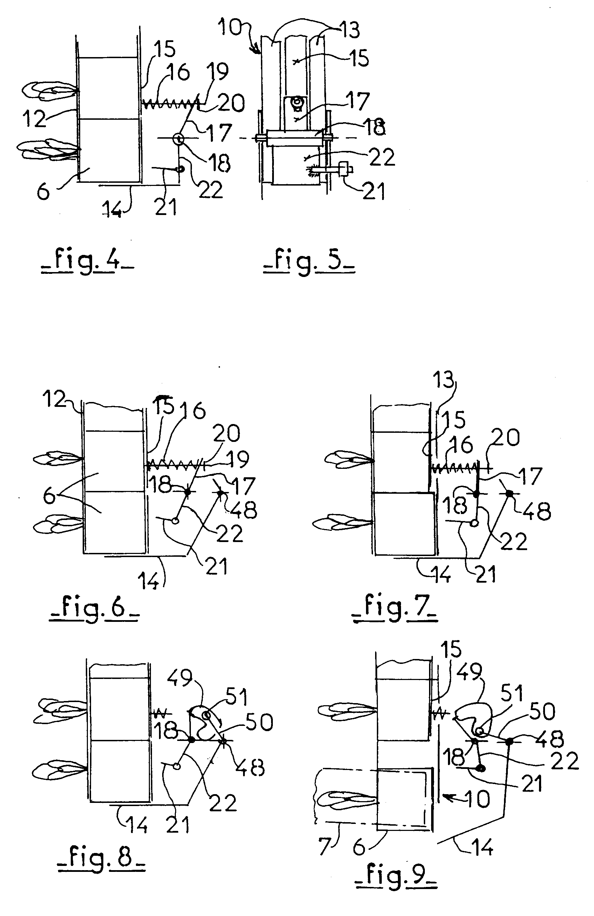

Simultanément au mouvement d'escamotage de la butée 14, un organe de retenue 15 entre en action pour retenir la colonne à partir de la deuxième motte, jusqu'au retour de la butée 14. Cet organe de retenue 15 est constitué d'une lame flexible disposée dans le fond de la goulotte 10, qui s'étend en hauteur à partir de la deuxième motte. On a représenté, figure 3, une section BB de cette goulotte qui montre, disposée au niveau du fond, la lame flexible 15. Le fond 13 est ouvert dans sa partie centrale, pour loger l'organe de retenue 15. Cette ouverture a une hauteur qui correspond à plusieurs mottes, au moins deux. Cet organe de retenue 15 est actionné au moyen d'un ressort 16 qui est comprimé par un levier 17. Ce levier 17 est articulé autour d'un axe 18 disposé à l'arrière de la goulotte 10, dans sa partie inférieure. Cet axe 18 est parallèle à l'axe 8 du système de pinces 7 ; il se situe sensiblement au même niveau que le plan de séparation de la première et de la deuxième motte.

On remarque, figures 4 et 5, que le ressort 16 est guidé sur une broche 19 solidaire de l'extrémité inférieure de l'organe de retenue 15. Cette broche 19 est perpendiculaire à l'organe 15. Une goupille transversale 20 est disposée à l'extrémité de ladite broche, derrière le levier 17 ; elle permet audit levier de ramener l'organe de retenue 15 en position inactive pour libérer le passage dans le bas de la goulotte 10, et permettre la circulation des mottes par simple gravité.

Le levier 17 et la butée 14 sont en forme de lame métallique et sont manoeuvrés par une bielle de commande 21 qui est reliée à un système de cames détaillé plus loin. Cette bielle 21 agit sur une manivelle 22 solidaire de l'axe d'articulation 18. La butée 14 consiste en un repli à l'équerre situé à la partie inférieure de la manivelle de commande 22, sous l'axe d'articulation 18. Au-dessus de l'axe 18, le levier 17 est aménagé en une sorte de poussoir en forme de fourche,qui comprime le ressort 16.

Ce levier 17 est animé au moyen de la manivelle 22 par une bielle 21. Cette bielle 21 est articulée sur un tourillon solidaire de la manivelle 22 et disposé sous l'axe d'articulation 18, à mi-hauteur entre le niveau de cet axe 18 et le niveau de la butée 14. Le levier de commande 21 est animé par un organe basculeur 23 qui est lui-même mis en mouvement par un système de cames 24.

L'organe basculeur 23 est articulé autour d'un axe 25 solidaire du châssis 1. La bielle de commande 21 est articulée sur un tourillon 26 situé à la partie supérieure du basculeur 23. Entre l'axe 25 et le tourillon 26, à mi-distance, on trouve un galet suiveur 27 coopérant avec le système de cames 24. On remarque que l'axe 25 du basculeur 23 se situe sensiblement au même niveau que l'axe 18 du levier 17. Ces deux axes 18 et 25 sont parallèles entre eux et se situent sensiblement au même niveau que l'axe 8 des pinces 7.

Le système de cames 24 est monté sur l'axe 8, entraîné en même temps que les pinces 7. Ce système de cames est constitué d'un plateau interne 241 et d'une couronne externe co-axiale et coplanaire 242. Le plateau et la couronne sont découpés dans une tôle ; ils sont assemblés par des ponts 28 qui permettent le passage du galet 27 dans le chemin 29 qui est aménagé entre le plateau 241 et la couronne 242. Ce système de cames 24 se situe sur le côté du châssis 1.

Ce système de cames, double effet, permet une commande du type desmodromique du levier 17.

On remarque que le profil des cames est constitué de huit portions identiques, correspondant au nombre de pinces 7. Ce profil comporte une première portion circulaire centrée sur l'axe 8. Cette première portion permet de maintenir la butée 14 en position active de retenue de la première motte, alors que l'organe de retenue 15 est en position inactive et n'altère pas la circulation des mottes entassées les unes sur les autres dans la goulotte ; ensuite on trouve une portion de levée qui permet de pousser le basculeur 23 et, par l'intermédiaire de la bielle de commande 21 de faire basculer le levier 17 autour de son axe 18 provoquant de façon simultanée l'éclipsage rapide de la butée 14 et la mise en position active de l'organe de retenue 15 sous l'effet de la branche supérieure du levier 17 qui comprime le ressort 16. Ensuite ce profil comporte une portion de retour rapide de la butée 14 et de l'organe de retenue 15, identique à la levée, suivi d'une nouvelle portion circulaire qui correspond à la première portion et au cours de laquelle la butée 14 est de nouveau en position active pour supporter la colonne de mottes alors que l'organe de retenue 15 est revenu en position inactive pour permettre le mouvement de desserte de ladite colonne.

Le système de cames 24 est synchronisé avec le mouvement des pinces 7 pour réaliser l'éclipsage de la butée 14 dès que la pince appropriée a pris possession de la première motte à la partie inférieure de la goulotte 10. Ce système de cames est même monté directement sur l'axe 8 des pinces 7 et il est calé par rapport à ces pinces.

Les figures 6 à 9 représentent une variante des moyens d'immobilisation des mottes dans la goulotte 10. Ces moyens ont pour but de décaler l'opération qui consiste à retenir la colonne de mottes dans la goulotte 10 à partir de la deuxième motte, par rapport à l'opération qui consiste à libérer la première motte simultanément à sa prise en charge par le système de pinces qui la positionne en terre.

La figure 6 représente, de façon schématique et partielle, la butée 14 en position active de retenue de la première motte et le levier 17 en position inactive de pincement de la deuxième motte. La deuxième motte et les mottes supérieures sont libres dans la goulotte.

La butée 14 est articulée autour d'un axe 48 situé derrière l'axe 18, parallèlement à ce dernier.

La figure 7 représente la butée 14 en position active de retenue de la première motte alors que le levier 17 a pivoté autour de l'axe 18 entraîné par la manivelle 22 qui est commandée par la bielle 21 du système de came 24. Le mouvement du levier 17 permet, par l'intermédiaire du ressort 16, d'agir sur l'organe de retenue 15 qui comprime au moins la deuxième motte contre les replis avant 12 de la goulotte. Ce blocage prématuré de la deuxième motte, par rapport à l'escamotage de la butée 14, permet d'éviter une sortie accidentelle de plusieurs mottes au moment de l'escamotage de ladite butée 14.

La figure 8 représente, comme la figure 6, la butée 14 en position active de retenue de la première motte et la manivelle 22 dans une position qui correspond au maintien du levier 17 en position inactive de maintien de la deuxième motte. L'axe 18 du levier 17 comporte, à l'une de ses extrémités, une came 49 qui agit, par l'intermédiaire d'un bras 50, sur la butée 14.

Le basculement de l'axe 18 sous l'effet de la manivelle 22 provoque une rotation de la came 49 autour de cet axe 18. Le galet 51 monté en bout du bras 50, est guidé dans le chemin de cette came 49 et il reste, dans un premier temps, immobile, pendant le temps nécessaire pour effectuer un premier déplacement du levier 17 et une compression de la deuxième motte. Dans un deuxième temps, le galet 51 effectue, sous l'effet de la came 49, un mouvement brusque en direction de l'axe 18, ce qui provoque un basculement rapide de la butée 14 autour de son axe 48 et, simultanément, la libération de la première motte qui est prise en charge par les pinces 7 du système de mise en terre.

Le mouvement inverse de la manivelle 22 sous l'effet de la bielle 21 provoque tout d'abord un retour rapide de la butée 14 en position active puis le recul de l'organe de retenue 15, et une libération de la deuxième motte qui, par simple gravité, descend en position de première motte en même temps que toute la colonne.

Une machine de plantation peut comporter plusieurs modules tels que décrits ci-dessus. Chaque module est alors relié à un bâti général 30, au moyen d'une flèche rigide 31 dont une extrémité est articulée sur le châssis 1 du module autour d'un axe 32 qui est transversal et horizontal, et sur un axe identique 33 disposé sur ledit bâti. L'axe 32 est disposé à la partie supérieure avant du châssis 1.

Le module de plantation se comporte comme une simple remorque, tractée par le bâti général 30 de la machine. Ce module est libre pour pouvoir suivre les ondes du terrain, guidé par sa roue de référence 2.

Pour pouvoir relever ce module lors du transport notamment, on a prévu un bras 34 disposé parallèlement au bras 31. Ce bras 34 comporte, au niveau du module par exemple, une lumière 35 qui offre une certaine liberté au châssis 1 pour épouser la surface du sol et aussi pour permettre le réglage de la profondeur de plantation. Cette lumière 35 coopère avec un axe 36 disposé transversalement, parallèle à l'axe 32, mais à la partie inférieure du châssis 1.

Le réglage de la profondeur de plantation s'effectue au moyen des roues plombeuses 5 qui sont montées à l'arrière du module. Le réglage de la profondeur de plantation s'effectue dans une plage de trois centimètres environ. Pour obtenir une grande précision, ce réglage est réalisé au moyen d'une manivelle ou volant 37 actionné directement par l'opérateur ; ce volant 37 commande une vis 38 qui permet de faire monter ou descendre les roues 5 par rapport au châssis 1.

On peut également régler la position de la roue de référence 2. Cette roue 2 est montée sur une paire de bras formant une chape 39 articulée à l'avant du châssis 1 sur un axe transversal horizontal 40 disposé entre les axes 32 et 36. Cette chape 39 est réglable et verrouillable par rapport à la partie avant 41 du châssis 1.

Le mouvement en rotation des pinces 7 peut être obtenu au moyen d'une transmission générale, à partir du bâti de la machine qui permet un entraînement simultané de l'ensemble des modules solidaires de ladite machine ; cet entraînement est généralement réalisé au moyen d'une roue ou d'un rouleau, non représenté, en contact avec le sol afin d'établir une relation entre le pas de plantation et le diamètre de ladite roue ou rouleau.

Cet entraînement s'effectue de préférence par roues à chaines avec par exemple un axe principal centré sur l'axe 31 et un renvoi au niveau de l'axe 32 pour éviter les problèmes de tension de chaines.

## Revendications

1. Machine de plantation de mottes cubiques, du type comportant - une goulotte de distribution (10) dans laquelle sont juxtaposées en colonne lesdites mottes (6), - des moyens de prélèvement de la première motte à l'extrémité aval de la goulotte, en forme de pinces (7) rotatives, dont le mouvement est synchronisé avec le mouvement d'avance de la machine, - des moyens dont le fonctionnement est synchronisé pour immobiliser les mottes dans ladite goulotte, comprenant une butée escamotable (14) disposée à l'extrémité de la goulotte pour retenir la première motte de ladite colonne et un organe de retenue (15), disposé au-dessus de ladite butée escomatable pour agir partir de la deuxième motte de la colonne, caractérisée en ce que d'une part la goulotte (10) a une section en forme de U complétée, au moins à sa partie aval, par des replis (12) formés à l'extrémité des branches latérales dudit U et orientés vers l'intérieur, pour recouvrir partiellement le dessus des mottes de part et d'autre du plant, et en ce que, d'autre part, l'organe de retenue (15) qui est en forme de lame flexible, est disposé au niveau du fond (13) de ladite goulotte, pour comprimer les mottes à partir de la deuxième motte au moins contre lesdits replis (12) de la goulotte.

2. Machine de plantation selon la revendication 1, caractérisée en ce que la butée (14) et les moyens de manoeuvre de l'organe de retenue (15) sont réunis sur un même levier (17) articulé autour d'un axe (18) transversal et horizontal, situé à la partie inférieure arrière de la goulotte (10), lequel lever (17) comporte une manivelle (22) animée par l'intermédiaire d'une bielle (21) au moyen d'un système de cames (24), dont le mouvement est synchronisé avec celui des pinces (7).

3. Machine de plantation selon la revendication 1, caractérisée en ce que les moyens de manoeuvre de l'organe de retenue (15) sont disposés sur un lever (17) articulé autour d'un axe (18) transversal horizontal et situé à la partie inférieure arrière de la goulotte (10), et en ce que la butée (14) est solidaire d'un axe (48) disposé au même niveau que l'axe (18), à l'arrière, laquelle butée (14) est mobile sous l'effet d'un système de commande par came au moyen d'une came (49) solidaire de l'axe (18), actionnée par la manivelle (22) du lever (17), et qui permet de retarder le mouvement de la butée (14) par rapport à la mise en action de l'organe de retenue (15).

4. Machine de plantation selon l'une quelconque des revendications 2 ou 3, caractérisée en ce que le levier (17) consiste en un prolongement en forme de poussoir qui actionne l'organe de retenue (15) par l'intermédiaire d'un ressort (16) de compression, et rappelle ledit organe (15) au moyen d'une goupille (20) située à l'extrémité d'une broche (19) servant à guider ledit ressort, laquelle broche (19) est solidaire dudit organe (15).

5. Machine de plantation selon la revendication 2, caractérisée en ce qu'elle comporte un système de cames (24) constitué d'un plateau central (241) et d'une couronne externe (242) concentriques et coplanaires, assemblés par des ponts (28), définissant entre eux, un chemin (29) dont le profil constitue la came proprement dite, et dans lequel est guidé un galet suiveur (27).

6. Machine de plantation selon la revendication 5, caractérisée en ce que le lever (17) est commandé par le galet suiveur (27) monté sur un levier basculeur (23) et par une bielle (21) interposée entre les deux.

7. Machine de plantation selon la revendication 5, caractérisée en ce que les pinces (7) et le système de cames (24), sont disposés sur un même axe (8) disposé au centre et à la partie supérieure du châssis (1).

8. Machine de plantation selon l'une quelconque des revendications 1 à 7, caractérisée en ce qu'elle comporte, au niveau de chaque module de plantation, une goulotte (10) verticale, solidaire d'un châssis (1) comprenant :
- une roue avant (2) servant de référence sur le sol ;
- un soc (3) situé sous ladite goulotte (10) et sous les moyens de prélèvement en forme de pinces rayonnantes (7) ;
- des roues plombeuses (5) disposées à l'arrière servant à régler la profondeur de plantation des mottes ;
- des moyens de liaison avec un bâti principal (30) qui peut comporter plusieurs modules de plantation.

9. Machine de plantation selon la revendication 8, caractérisée en ce que les moyens de liaison du châssis (1) avec le bâti principal (30) sont constitués d'une flèche rigide (31) articulée sur le châssis (1) autour d'un axe transversal horizontal (32) et sur le bâti autour d'un axe similaire.

10. Machine de plantation selon la revendication 9, caractérisée en ce qu'elle comporte des moyens de relevage du module, en forme de bras supplémentaire (34), disposé parallèlement à la flèche (31) entre le bâti (30) et le châssis (1), avec un jeu suffisant pour laisser libre le châssis (1) pendant les phases de plantation.

## Claims

1. A transplanter for seedling blocks, of the type comprising - a distribution chute (10) in which are juxtaposed in column the said blocks (6), - means for picking-up the first block at the downstream extremity of the chute, in the form of rotary claws (7), whose motion is synchronised to the forward motion of the machine, - means whose operation is synchronised to immobilise the blocks in the said chute, comprising a removable stop (14) arranged at the extremity of the chute to retain the first block of the said column and a retaining unit (15) arranged above the said removable stop to act from the second block of the chute, characterised in that on the one hand, the chute (10) exhibits a U-shaped section completed, at least at its downstream section, by folds (12) formed at the extremity of the lateral branches of the said U and oriented inwards, to cover partially the top section of the blocks on both sides of the seedling, and in that, on the other hand, the retaining unit (15) which is formed as a flexible blade, is arranged at the bottom (13) of the said chute, to compress the blocks from the second block at least against the said folds (12) of the chute.

2. A transplanter according to claim 1, characterised in that the stop (14) and the control means of the retaining unit (15) are gathered on the same lever (17) articulated round an axis (18) transversal and horizontal, situated at the lower rear section of the chute (10), whereas the said lever (17) comprises a crank (22) actuated via a rod (21) using a system of cams (24), whose motion is synchronised to that of the claws (7).

3. A transplanter according to claim 1, characterised in that the control means of the retaining unit (15) are arranged on a lever (17) articulated round a transversal horizontal axis (18) and situated at the lower rear section of the chute (10), and in that the stop (14) is interconnected to an axis (48) arranged at the same level as the axis (18), at the rear, whereby the said stop (14) is mobile under the effect of a cam control system, using a cam (49) interconnected to the axis (18), actuated by the crank (22) of the lever (17), and which enables to delay the motion of the stop (14) with respect to the actuation of the retaining unit (15).

4. A transplanter according to any of the claims 2 or 3, characterised in that the lever (17) consists of an extension in the form of a pusher which actuates the retaining unit (15) via a compression spring (16) and recalls the said unit (15) via a pin (20) situated at the extremity of a spindle (19) serving to guide the said spring, whereby the said spindle (19) is interconnected to the said unit (15).

5. A transplanter according to claim 2, characterised in that it comprises a system of cams (24) consisting of a centre plate (241) and of an external crown (242), concentric and coplanar, assembled by bridges (28), delineating with respect to one another, a path (29) whose profile makes up the cam properly speaking, and in which is guided a follower (27).

6. A transplanter according to claim 5, characterised in that the lever (17) is controlled by the follower (27) installed on a toggle lever (23) and by a rod (21) interposed between both of them.

7. A transplanter according to claim 5, characterised in that the claws (7) and the system of cams (24), are arranged on the same axis (8) placed at the centre and at the upper section of the chassis (1).

8. A transplanter according to any of the claims 1 to 7, characterised in that it comprises, at each planting module, a chute (10) vertical, interconnected to a chassis (1) comprising :
- a front wheel (2) serving as a reference on the ground;
- a ploughshare (3) situated under the said chute (10) and under the pick-up means in the form of irradiating claws (7);
- stamping wheels (5) arranged at the rear serving to adjust the planting depth of the blocks;
- linking means with a main frame (30) which may contain several planting modules.

9. A transplanter according to claim 8, characterised in that the linking means of the chassis (1) with the main frame (30) consist of a rigid beam (31) articulated on the chassis (1) round a horizontal transversal axis (32) and on the frame round a similar axis.

10. A transplanter according to claim 9, characterised in that it comprises means to raise the module, in the form of an additional arm (34), arranged parallel to the beam (31) between the frame (30) and the chassis (1), with sufficient clearance to clear the chassis (1) during the planting phases.

## Patentansprüche

1. Pflanzmaschine für würfelförmige Ballen des Typs, umfassend - eine Verteilungsrutsche (10), in welcher die Ballen (6) in Säule nebeneinander angeordnet sind, - Mittel zur Abnahme des ersten Ballens am unteren Ende der Rutsche in Form von drehenden Zangen (7), deren Bewegung mit der Vorwärtsbewegung der Vorwärtsbewegung der Maschine synchronisiert ist, - und Mittel, deren Funktion so synchronisiert ist, daß sie die Ballen in der Rutsche festhalten, die einen wegklappbaren Anschlag (14), der am Ende der Rutsche angeordnet ist, um den ersten Ballen der Säule zurückzuhalten, und ein Rückhalteelement (15) umfassen, das über dem wegklappbaren Anschlag angeordnet ist, um vom zweiten Ballen der Säule aus zu wirken, dadurch gekennzeichnet, daß einerseits die Rutsche (10) einen Querschnitt in U-Form aufweist, der wenigstens an seinem unteren Teil durch Umbiegungen (12) vervollständigt ist, die am Ende der seitlichen Schenkel des U ausgebildet und nach innen gerichtet sind, um teilweise die Oberteile der Ballen beiderseits des Setzlings zu bedecken, und daß andererseits das Rückhalteelement (15), das die Form eines flexiblen Streifens hat, in Höhe des Bodens (13) der Rutsche angeordnet ist, um die Ballen vom zweiten Ballen aus wenigstens an die Umbiegungen (12) der Rutsche zu drücken.

2. Pflanzmaschine nach Anspruch 1, dadurch gekennzeichnet, daß der Anschlag (14) und die Mittel zum Betätigen des Rückhalteelements (15) mit demselben Hebel (17) verbunden sind, der um eine quer verlaufende und horizontale Achse (18) herum gelenkig angebracht ist, die sich im hinteren unteren Teil der Rutsche (10) befindet, welcher Hebel (17) einen Handgriff (22) aufweist, der über ein Pleuel (21) mittels eines Nockensystems (24) angetrieben wird, dessen Bewegung mit derjenigen der Zangen (7) synchronisiert ist.

3. Pflanzmaschine nach Anspruch 1, dadurch gekennzeichnet, daß die Mittel zur Betätigung des Rückhalteelements (15) an einem Hebel (17) angeordnet sind, der um eine Achse (18) gelenkig angebracht ist, die quer verläuft, horizontal ist und sich am hinteren unteren Teil der Rutsche (10) befindet, und daß der Anschlag (14) mit einer Achse (48) fest verbunden ist, die in derselben Höhe wie die Achse (18) hinten angebracht ist, welcher Anschlag (14) unter der Einwirkung eines Nocken-Steuersystems mittels einer mit der Achse (18) fest verbundenen Nocke (49) beweglich ist, die durch den Handgriff (22) des Hebels (17) betätigt wird, und es gestattet, die Bewegung des Anschlags (14) in bezug auf den Einsatz des Rückhalteelements (15) zu verzögern.

4. Pflanzmaschine nach einem der Ansprüche 2 oder 3, dadurch gekennzeichnet, daß der Hebel (17) aus einer Verlängerung in Form eines Drückers besteht, der das Rückhalteelement (15) über eine Druckfeder (16) betätigt und das Element (15) mittels eines Stiftes (20) zurückstellt, der sich am Ende einer Spindel (19) befindet, die dazu dient, die Feder zu führen, welche Spindel (19) mit dem Element (15) fest verbunden ist.

5. Pflanzmaschine nach Anspruch 2, dadurch gekennzeichnet, daß sie ein Nockensystem (24) aufweist, das aus einer zentralen Platte (241) und einem äußeren Kranz (242), die konzentrisch und koplanar sind, besteht, die durch Stege (28) zusammengefügt sind, die miteinander einen Weg (29) definieren, dessen Profil die eigentliche Nocke bildet, und in welchem eine Folgerolle (27) geführt ist.

6. Pflanzmaschine nach Anspruch 5, dadurch gekennzeichnet, daß der Hebel (17) von der Folgerolle (27), die an einem Kipphebel (23) angebracht ist, und von einem Pleuel (21) gesteuert wird, das zwischen den beiden angeordnet ist.

7. Pflanzmaschine nach Anspruch 5, dadurch gekennzeichnet, daß die Zangen (7) und das Nockensystem (24) auf derselben Achse (8) angeordnet sind, die im Zentrum und am oberen Teil des Rahmens (1) angeordnet ist.

8. Pflanzmaschine nach einem der Ansprüche 1 bis 7, dadurch gekennzeichnet, daß sie in Höhe jedes Pflanzmoduls eine vertikale Rutsche (10) aufweist, die mit einem Rahmen (1) fest verbunden ist, der umfaßt:
- ein vorderes Rad (2), das als Bezugspunkt auf dem Boden dient,
- eine Pflugschar (3), die sich unter der Rutsche (10) und unter den Abnahmemitteln in Form von strahlenförmigen Zangen (7) befindet,
- Bleiräder (5), die hinten angeordnet sind und zum Regeln der Pflanztiefe der Ballen dienen,
- Mittel zum Verbinden mit einem Haupttragelement (30), das mehrere Pflanzmodule aufweisen kann.

9. Pflanzmaschine nach Anspruch 8, dadurch gekennzeichnet, daß die Mittel zum Verbinden des Rahmens (1) mit dem Haupttragelement (30) aus einem starren Pflugbalken (31) bestehen, der am Rahmen (1) um eine horizontale, in Querrichtung verlaufende Achse (32) und am Tragelement um eine ähnliche Achse gelenkig angebracht ist.

10. Pflanzmaschine nach Anspruch 9, dadurch gekennzeichnet, daß sie Mittel zum Aufdecken des Moduls in Form eines zusätzlichen Arms (34) aufweist, der zwischen dem Tragelement (30) und dem Rahmen (1) parallel zum Pflugbalken (31) mit einem Spielraum angeordnet ist, der ausreicht, um den Rahmen (1) während der Pflanzphasen frei zu lassen.
